# DEMANDE DE BREVET EUROPEEN

(11) **EP 1 639 927 A1**
(43) Date de publication de la demande: **29.03.2006**
(21) Numéro de dépôt: 05020374.4
(22) Date de dépôt: 19.09.2005
(51) Int. Cl.: A47J 37/07

(54) **Barbecue**

(30) Priorité: 24.09.2004 FR 0410099
(71) Demandeur: Dreville, Marcel, 69500 Bron (FR)
(72) Inventeur: Dreville, Marcel, 69500 Bron (FR)
(74) Mandataire: Jeannet, Olivier

(57) **Abrégé**

L'invention concerne un barbecue 1 à charbon de bois, composé de "foyers radiants multiples" 2, verticaux, amovibles, modulaires, orientables, ces derniers étant positionnés sur un plateau perforé 3. Ce plateau 3 repose sur une plaque de base regroupant des tablettes latérales et des pieds 17. Des broches 33, reposant sur des panneaux verticaux 30, supportent, maintiennent ou soutiennent les aliments à cuire au dessus d'un bac à jus et au centre du dispositif radiant. Il est conçu pour cuire les aliments en position statique, sur toutes leurs faces. Les foyers 2 sont disposés au choix de l'utilisateur et à la distance adéquate en fonction du volume, de la forme et de la qualité du produit à cuire.

Allumage rapide, entretien réduit et facile.

## Description

La présente invention concerne un barbecue. Un barbecue classique dispose d'un foyer horizontal ou vertical, ou d'un foyer pouvant être placé en position horizontale ou verticale par basculement.

Ce type de barbecue a pour inconvénient de ne pas être toujours très performant en ce qui concerne la cuisson, notamment de ne pas être adaptable aux formes très différentes que peuvent présenter des aliments à cuire. De plus, ces barbecues ont pour inconvénients de ne pas être faciles à arrêter après la cuisson, à manipuler ou à nettoyer.

Il est connu par le document US 3 140 651 une cuisinière à charbon de bois comprenant un support en forme de caisse, des paniers de réception de charbon de bois, et une grille de réception des aliments à cuire. Les paniers sont suspendus le long des bords longitudinaux supérieurs de la caisse, avec possibilité de réglage en position le long de ces bords, et la grille peut être suspendue dans la zone médiane longitudinale de la caisse, entre les rangées de paniers.

Cette cuisinière a aussi pour inconvénient de ne pas être parfaitement adaptable aux formes très différentes que peuvent présenter des aliments à cuire, et de ne pas être facile à manipuler et à nettoyer.

La présente invention vise à remédier à ces inconvénients. Le barbecue qu'elle concerne comprend, de manière connue en soi, un support sur lequel peuvent être placés des éléments allongés formant des foyers radiants.

Selon invention,
- le support est une plaque de base pourvue d'une multitude de moyens de positionnement, aménagés côte à côte en différents emplacements de sa surface et sur une large partie de celle-ci ; et
- chaque foyer radiant comprend au moins un moyen de positionnement complémentaire de ceux que comprend la plaque de base, les foyers radiants étant destinés à être disposés sur cette plaque de base et les moyens respectifs de positionnement des foyers radiants et de la plaque de base permettant une disposition des foyers radiants selon une multitude de positions relatives de ces foyers radiants, notamment en une ou plusieurs séries de foyers radiants alignés, selon des positions verticales et en angle les uns par rapport aux autres de telle sorte que les chaleurs radiantes de ces foyers convergent vers des zones centrales, ou selon des positions horizontales et côte à côte, de manière à former une surface de chauffe horizontale.

Chaque foyer radiant peut ainsi être disposé en différents emplacements de la plaque de base, selon la forme spécifique des aliments à cuire et le type de cuisson recherchée.

De préférence, les moyens de positionnement de chaque foyer radiant et de la plaque de base sont conformés pour permettre un pivotement du foyer radiant par rapport à la plaque de base lorsque ce foyer radiant est positionné sur cette plaque de base.

Une possibilité d'orientation des foyers radiants après disposition sur la plaque de base est ainsi rendue possible.

De préférence, les moyens de positionnement de chaque foyer radiant et de la plaque de base permettent une rétention et/ou un verrouillage du foyer radiant sur la plaque de base.

Aucun risque de renversement des foyers radiants n'existe ainsi. Le barbecue comprend avantageusement au moins un support pour les aliments à cuire, pouvant être pourvu ou non d'au moins un moyen de positionnement complémentaire de ceux que comprend la plaque de base.

Selon une possibilité, dans ce cas, un support d'aliments inclut deux montants présentant une multitude de perforations destinées à recevoir des broches, ces montants étant reliés l'un à l'autre par une traverse inférieure de préférence sous la forme d'un récipient de réception des jus de cuisson.

Ces perforations permettent des dispositions variées des broches assurant le support ou la suspension des aliments à cuire et/ou le maintien latéral de ces derniers ou, par séries de broches disposées côte à côte horizontalement pour former des « étagères » de réception de ces aliments.

Le barbecue peut comprendre des broches positionnées dans les trous des montants et maintenues éventuellement par des taquets d'arrêt.

Selon une autre possibilité, un support d'aliments peut comprendre une série de broches parallèles, verticales, disposées sensiblement en cercle et reliées à une embase, ce support d'aliments formant ainsi une cage de réception verticale des aliments à cuire. Ce support est en particulier adapté à la cuisson des volailles tel qu'un poulet entier par exemple.

Un foyer radiant comprend de préférence :
- une enveloppe allongée présentant une section demi-circulaire ou demi-polygonale ;
- un fond perforé situé en hauteur par rapport à la base du foyer radiant, pouvant être prolongé par une paroi inclinée vers le bas, formant stabilisateur et/ou un réflecteur thermique ;
- une grille en façade plus ou moins en surplomb sur sa base ;
- une grille verticale interne légèrement éloignée de la paroi du foyer radiant opposée à la grille de façade ;
- une barrière thermique à sa base ;
- une protection thermique sous la forme d'une plaque épousant l'enveloppe, mais située à distance de celle-ci ;
- un tourillon ou ergot de positionnement à sa base. Chaque foyer radiant peut comporter un trou supérieur facilitant sa préhension et sa manipulation, même lorsqu'il est chaud, au moyen d'un instrument, par simple insertion de cet instrument dans ce trou.

Le barbecue selon l'invention peut en outre comprendre des plaques en matériau résistant à la chaleur, pouvant être placées contre les bords en regard de deux foyers radiants consécutifs. Ces plaques forment des réflecteurs thermiques et/ou des pare-vent.

Le barbecue peut, en outre, comprendre une grille de cuisson horizontale pouvant être placée au -dessus des foyers radiants, que ceux-ci soient en position verticale ou en position horizontale.

La plaque de base peut reposer sur les bords relevés d'une plaque de propreté, cette dernière assurant la récupération des cendres.

Des tablettes, des élargisseurs et/ou des pieds, peuvent équiper le barbecue.

L'invention sera bien comprise, et d'autres caractéristiques et avantages de celle -ci apparaîtront, en référence au dessin schématique annexé, représentant, à titre d'exemple non limitatif, une forme de réalisation préférée du barbecue qu'elle concerne.
La figure 1 en est une vue en perspective ;
La figure 2 en est une vue dessus, alors qu'une grille de cuisson a été placée sur des foyers radiants qu'il comprend ;
La figure 3 est une vue en perspective éclatée d'une plaque de base et d'une table de support de cette plaque, qu'il comprend ;
La figure 4 est une vue de dessus, de trous avec fente radiale que peut présenter la plaque de base.
La figure 5 est une vue en perspective éclatée d'un foyer radiant qu'il comprend et d'un instrument permettant la saisie de ce foyer radiant ;
La figure 6 est une vue en perspective éclatée d'un support d'aliments à cuire, avec un bac de récupération des jus de cuisson.
La figure 7 est une vue de ce support d'aliments, en bout ;
La figure 8 est une vue de ce support d'aliments, de coté ;
La figure 9 est une vue d'un autre support d'aliments ;
La figure 10 est une vue partielle, à échelle agrandie, de la base d'un foyer radiant et du tourillon que comprend cette base, et
Les figures 11a et 11b illustrent la position du tourillon dans un trou de la plaque de base.

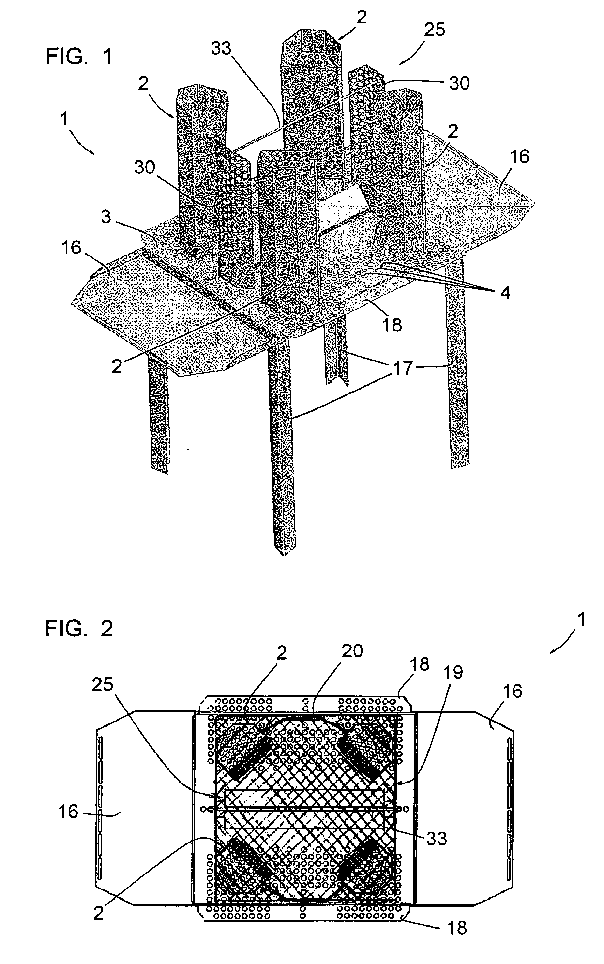

La figure 1 représente un barbecue 1 fonctionnant au charbon de bois, caractérisé par l'exploitation simultanée de foyers radiants 2, multiples, modulaires, amovibles, verticaux, orientables, indépendants les uns des autres, répartis tout autour des aliments à cuire, ceux-ci étant en position statique. Ce sont les particularités, entre autres, de ce type de barbecue atypique.

Les foyers 2, sous la forme de foyers radiants, sont disposés verticalement, au choix de l'utilisateur, sur une plaque de base 3 perforée, horizontale, dans une configuration telle qu'ils épousent au mieux et à la distance adéquate pour une cuisson définie, la forme et le volume du produit à cuire ou à rôtir placé au centre du barbecue 1. Cette répartition particulière des foyers radiants 2 tout autour des produits à cuire, permet de réduire le temps de cuisson, de rendre cette dernière plus homogène, plus économique, le rendement thermique étant nettement amélioré ; elle permet également une cuisson saine, les aliments à cuire n'étant jamais en contact avec les gaz de combustion dégagés dans les foyers. Cette organisation des foyers radiants 2 évite au maximum les manipulations des aliments, en position statique pendant la phase de cuisson.

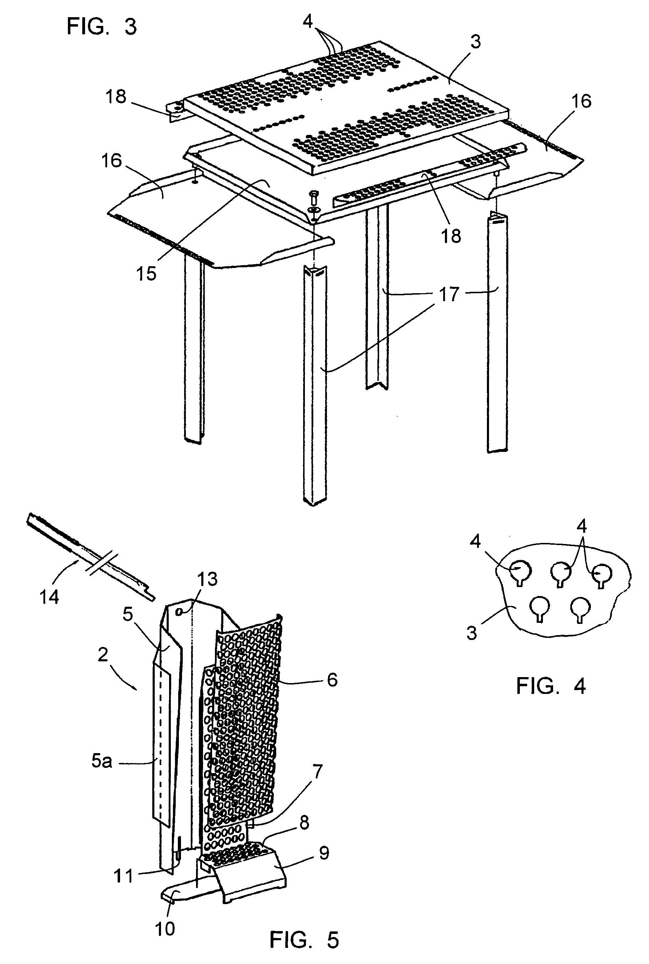

La plaque perforée 3 présente des trous 4 ; ces derniers sont circulaires ou en majeure partie circulaire, et peuvent comprendre une fente radiale, suivant le dispositif adopté, ainsi que le montre la figure 4.

Chaque foyer radiant 2 est constitué d'une enveloppe 5 plus ou moins haute, dont la section est sensiblement un demi-cercle ou un demi-polygone. Cette enveloppe 5 entoure et contribue en quelque sorte, à l'ensemble du foyer proprement dit. La partie avant de cette enveloppe 5 est fermée par une grille 6 plus ou moins inclinée en surplomb. Le foyer interne est composé d'une grille 7 située verticalement le long du dos du foyer 2 mais dégagée de ce dos afin de laisser un espace pour le passage de l'air nécessaire à la combustion du charbon dans la partie haute du foyer ; le fond perforé 8 du foyer, positionné à une certaine hauteur par apport à la base du foyer, est prolongé en avant du foyer par une paroi 9 inclinée vers le bas, jouant le rôle de réflecteur thermique et de stabilisateur. L'ensemble grille avant 6, grille de fond 7, grille interne 8 et parois latérales de l'enveloppe 5, forme le foyer 2, dans lequel sera placé le comburant, charbon de bois et ses dérivés. Entre le bas du foyer 2 et la grille de fond 7 est disposée une barrière thermique 10 évitant tout échauffement de la plaque de base 3 et donc la déformation de celle-ci. Une plaque extérieure 5a, épousant la forme de l'enveloppe mais située à une certaine distance de celle-ci, sert de protection thermique.

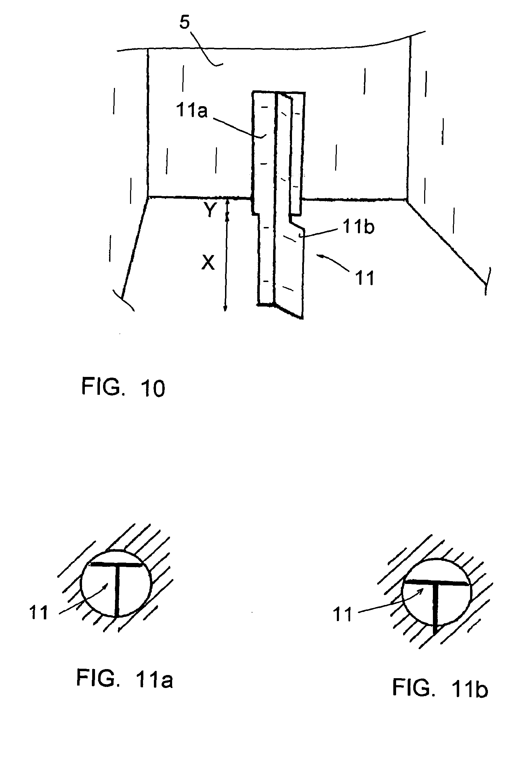

Chaque foyer radiant 2 comporte un tourillon 11 à sa base, destiné à être engagé dans l'un des trous 4 de la plaque 3. Comme plus particulièrement visible sur la figure 10, chaque tourillon 11 présente une structure profilée en T dont la partie haute 11a est fixée à la base de l'enveloppe 5 et la partie basse 11 b destinée à être engagée complètement dans l'un des trous de la plaque de base 3. Dans la partie basse 11 b, la largeur des branches du tourillon 11 en T, comporte deux zones (6) :
- Zone X : la largeur de la paroi de base du T est réduite sur les deux ailes, au moyen d'encoches, et la largeur de la paroi médiane est constante, mais les bords du tourillon 11 dans cette zone s'inscrivent parfaitement dans le diamètre des trous de la plaque de base 3, comme le montre la figure 11a ;
- Zone Y, dont la hauteur est supérieure à l'épaisseur de la plaque de base : la largeur de la paroi de base du T est élargie et la largeur de la paroi médiane est très réduite.

En s'engageant dans un trou de la plaque de base 3, le tourillon 11, au niveau de la zone Y, après s'être positionné comme montré sur la figure 11a, se déplace latéralement comme montré sur la figure 11b, ce qui engage une partie de la paroi médiane inférieure sous la plaque de base 3, verrouillant ainsi l'ensemble du foyer radiant sur la plaque de base. Le foyer radiant peut être pivoté sur 360° par rapport à la plaque de base, donc être orienté de la façon la plus adéquate.

A la partie haute du foyer 2, un trou 13 permet l'engagement d'un crochet 14 de manipulation des foyers en activité.

Comme le montre la figure 2, la plaque de base perforée 3, aux bords abaissés, repose sur une plaque 15 dite de propreté, aux bords relevés. Un espace entre les deux, au moins égal à la longueur des tourillons 11, est ainsi aménagé, cet espace permettant notamment la récupération des cendres.

La plaque 15 peut recevoir des cornières perforées d'élargissement 18 ; elle peut être équipée de tablettes 16 et de pieds 17, ceux-ci pouvant être en différents matériaux.

Dans un cas particulier, montré sur la figure 2, une grille de cuisson 19 peut être installée horizontalement au-dessus des foyers 2, récupérant ainsi la chaleur dégagée. Dans une autre configuration, non représentée, les foyers 2 sont couchés et placés côte à côte, délimitant ainsi une surface de chauffe horizontale, au-dessus de laquelle, mais à une certaine distance suivant les produits sera disposée ou pas, une grille de cuisson.

La disposition en ligne des foyers 2 donne d'autres possibilités de cuisson.

Les foyers 2 peuvent être pontés entre eux, si nécessaire, par des plaques 20 en matériau résistant à la chaleur, formant des « réflecteurs thermiques pare-vent ». ces plaques 20 sont suspendues aux bords supérieurs des foyers adjacents 2, par deux crochets.

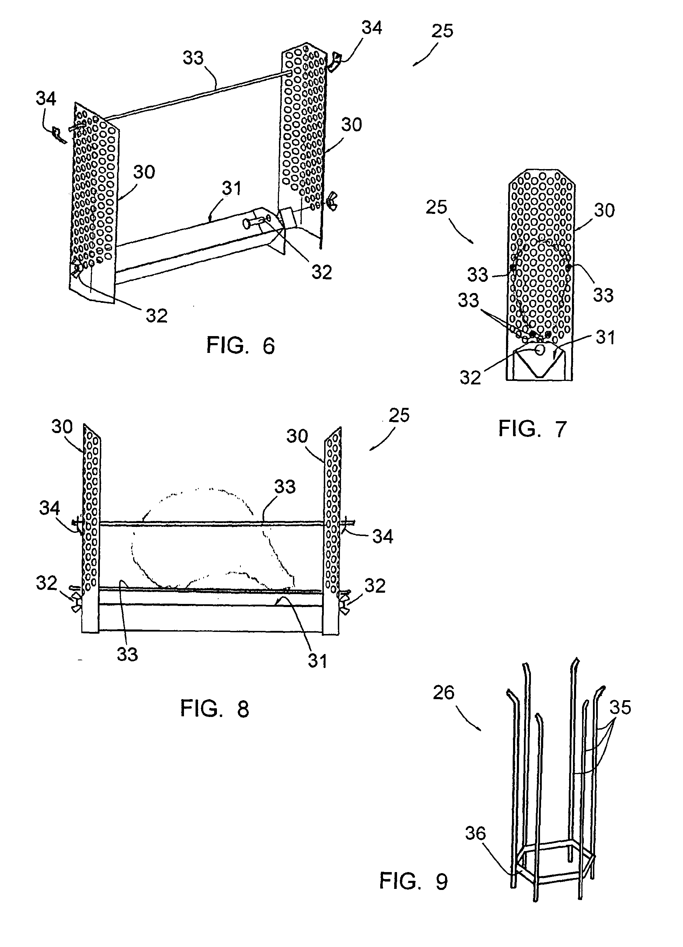

Le barbecue 1 comprend également deux supports d'aliments 25, 26 montrée sur les figures 6 à 8, d'une part, et 9, d'autre part.

Concernant le support 25, des panneaux « porte-broches » 30, multi-perforés, sont reliés l'un à l'autre par un bac de récupération de jus de cuisson au moyen de boulons 32 et sont ainsi maintenus verticalement.

Les aliments à cuire, entourés des foyers radiants 2, sont maintenus au-dessus du bac 31 de récupération des jus de cuisson par des broches 33 qui les supportent, les maintiennent latéralement ou les suspendent suivant les cas. Ces broches 33 prennent appui de part et d'autre, dans les trous des panneaux 30 et sont maintenus en place éventuellement, par des taquets d'arrêt 34.

Ce support 25 supprime toutes les grilles-cage articulées généralement utilisées'selon la technique antérieure.

Le support 26 comprend une série de broches parallèles 35, disposées sensiblement en cercle et reliées à une embase 36, ce support d'aliments formant ainsi une cage de réception des aliments à cuire. Ce support 26 est destiné à être placé verticalement dans une assiette ou un plat creux, au centre du barbecue 1, en étant entouré par les foyers radiants 2 et les plaques 20 et est en particulier adapté à la cuisson des volailles, un poulet entier par exemple.

Plusieurs ensembles ou éléments partiels décrits ci-dessus, peuvent être assemblés pour former un barbecue plus important.

Après cuisson, le nettoyage du barbecue est limité principalement à celui des broches 33 et 35 et éventuellement au bac 31 de récupération des jus de cuisson ; Cette opération est simple, les pièces en question n'ayant pas de dépôts calcinés.

L'extinction de chaque foyer radiant est facilité en les plongeant dans un seau remplit d'eau, à l'aide du crochet 14.

Il va de soi que l'invention n'est pas limitée à la forme de réalisation décrite ci-dessus à titre d'exemple mais qu'elle s'étend à toutes les formes de réalisations couvertes par les revendications ci-annexées.

## Revendications

1. Barbecue 1 comprenant un support (3) sur lequel peuvent être placés des éléments allongés (2) formant des foyers radiants, **caractérisé en ce que** :
- le support est une plaque de base (3) pourvue d'une multitude de moyens de positionnement (4), aménagés côte à côte en différents emplacements de sa surface et sur une large partie de celle-ci ; et
- chaque foyer radiant (2) comprend au moins un moyen de positionnement (11) complémentaire de ceux que comprend la plaque de base (3), les foyers radiants (2) étant destinés à être disposés sur cette plaque de base (3) et les moyens respectifs de positionnement (4, 11) des foyers radiants (2) et de la plaque de base (3) permettant une disposition des foyers radiants (2) selon une multitude de postions relatives de ces foyers radiants (2), notamment selon des positions verticales et côte à côte, en une ou plusieurs séries de foyers radiants (2) alignés, selon des positions verticales et en angle les uns par rapport aux autres de telle sorte que les chaleurs radiantes de ces foyers (2) convergent vers une même zone centrale ou selon des positions horizontales et côte à côte, de manière à former une surface de chauffe horizontale.

2. Barbecue (1) selon la revendication 1, **caractérisé en ce que** les moyens de positionnement (4, 11) de chaque foyer radiant (2) et de la plaque de base (3) sont conformés pour permettre un pivotement du foyer radiant (2) par rapport à la plaque de base (3) lorsque ce foyer radiant (2) est positionné sur cette plaque de base (3).

3. Barbecue (1) selon la revendication 1 ou la revendication 2, **caractérisé en ce que** les moyens de positionnement (4, 11) de chaque foyer radiant (2) et de la plaque de base (3) permettent une rétention et/ou un verrouillage du foyer radiant (2) sur la plaque de base (3).

4. Barbecue (1) selon l'une des revendications 1 à 3, **caractérisé en ce qu'**un foyer radiant (2) comprend :
- une enveloppe allongée (5) présentant une section demi-circulaire ou demi-polygonale.
- un fond perforé (8), situé en hauteur par rapport à la base du foyer radiant, pouvant être prolongé par une paroi inclinée (9) vers le bas, formant un stabilisateur et/ou un réflecteur thermique ;
- une grille en façade (6) plus ou moins en surplomb sur sa base, et
- une grille verticale interne (7), légèrement éloignée de la paroi du foyer radiant opposée à la grille de façade.
- une barrière thermique (10) à sa base
- une protection thermique (5a) sous la forme d'une plaque épousant l'enveloppe (5) mais située à distance de celle-ci ;
- un tourillon (11) ou ergot de positionnement à sa base.

5. Barbecue (1) selon l'une des revendications 1 à 3, **caractérisée en ce qu'**il comprend au moins un support (25, 26) pour les aliments à cuire, pouvant être pourvu ou non d'au moins un moyen de positionnement complémentaire de ceux que comprend la plaque de base.

6. Barbecue (1) selon la revendication 5, **caractérisé en ce qu'**il comprend un support d'aliments (25) incluant deux montants (30), présentant une multitude de perforations pouvant recevoir des broches (33), reliés l'un à l'autre par une traverse inférieure (31), ces montants (30) étant reliés l'un à l'autre par une traverse inférieure de préférence sous la forme d'un récipient de réception des jus de cuisson.

7. Barbecue (1) selon la revendication 5, **caractérisé en ce qu'**il comprend des broches (33) positionnées dans les trous des montants (30) et maintenues éventuellement par des taquets d'arrêt (34).

8. Barbecue (1) selon la revendication 5, **caractérisé en ce qu'**un support d'aliments (26) comprend une série de broches parallèles (35), disposées sensiblement en cercle et reliées à une embase (36), ce support d'aliments (26) formant ainsi une cage verticale de réception des aliments à cuire.

9. Barbecue (1) selon l'une des revendications 1 à 8, **caractérisé en ce qu'**il comprend des plaques (20) en matériau résistant à la chaleur, pouvant être placées contre les bords en regard de deux foyers radiants (2) consécutifs.

10. Barbecue (1) selon les revendications de 1 à 9, **caractérisé en ce qu'**il est équipé de tablettes (16) et/ou de pieds (17).
